# EUROPÄISCHE PATENTSCHRIFT

(11) **EP 1 267 106 B1**
(45) Veröffentlichungstag und Bekanntmachung des Hinweises auf die Patenterteilung: **17.05.2006**
(21) Anmeldenummer: 02012885.6
(22) Anmeldetag: 11.06.2002
(51) Int. Cl.: F16J 15/32

(54) **Lippendichtring**
Lip seal
Joint à lèvre

(30) Priorität: 13.06.2001 DE 10128776
(43) Veröffentlichungstag der Anmeldung: 18.12.2002
(73) Patentinhaber: Carl Freudenberg KG, 69469 Weinheim (DE)
(72) Erfinder: Kammerer, Eric, 52200 Langres (FR); Perratone, Sandrine, 52200 Langres (FR)

(56) Entgegenhaltungen:
- EP-A- 0 281 452
- US-A- 5 755 444

## Beschreibung

Die Erfindung betrifft einen Lippendichtring für ein relativ bewegbares Maschinenelement, umfassend eine flexible Dichtlippe aus polymerem Werkstoff, die das Maschinenelement im Bereich eines Dichtspalts unter einer elastischen Vorspannung anliegend umschließt, wobei der Dichtspalt an zumindest einer Umfangsstelle von einer Drallstufe in Längsrichtung durchdrungen ist, wobei die Drallstufe durch eine schraubengangförmige Nut in der Dichtlippe und die der Nut zugewandte abzudichtende Oberfläche des Maschinenelements begrenzt ist und wobei die Nut den abzudichtenden Raum mit der Umgebung verbindet.

### Stand der Technik

Ein solcher Lippendichtring ist aus der DE 195 32 701 C2 bekannt. Der Dichtspalt ist zumindest im Bereich der die Drallstufe begrenzenden Nut durch ein Wachs verschlossen. Das Wachs innerhalb des Dichtspalts ist vorgesehen um überprüfen zu können, ob der Lippendichtring falsch eingebaut und/oder beschädigt ist. Ist der Lippendichtring beispielsweise falsch eingebaut oder beschädigt, wird bei einer Druckprüfung kein zufriedenstellendes Abdichtungsergebnis erzielt. Für die Druckprüfung wird der abzudichtende Raum im Anschluss an die Montage des Lippendichtrings mit Druckluft eines vorgegebenen Prüfdrucks beaufschlagt und der Druckabfall während einer bestimmten Prüfzeit beobachtet. Wird der Druck innerhalb der Prüfzeit weitgehend gehalten, ist das ein Zeichen dafür, dass die Dichtlippe korrekt eingebaut und unbeschädigt ist. Ergibt sich demgegenüber ein ungewöhnlich schneller Druckabfall, ist die Dichtlippe entweder fehlerhaft montiert und/oder beschädigt. Wurde die Druckprüfung zufriedenstellend absolviert, wird das Wachs während der bestimmungsgemäßen Verwendung des Lippendichtrings betriebsbedingt erwärmt und vollständig aus dem Dichtspalt in Richtung des abzudichtenden Raums gefördert.

Der Erfindung liegt die Aufgabe zugrunde, einen Lippendichtring der eingangs genannten Art derart weiterzuentwickeln, dass das Medium den Dichtspalt während einer Druckprüfung vor Beginn der Gebrauchsdauer des Lippendichtrings sicher verschließt und dass Ölkohlebildung in der Nut während einer langen Gebrauchsdauer deutlich minimiert wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Dichtspalt im Bereich der die Drallstufe begrenzenden Nut durch ein hochtemperaturbeständiges, reibungsverringerndes Medium, nur zur Durchführung einer Druckprüfung verschlossen ist und dass das Medium eine Oberflächenbeschichtung bildet, die während der im Wesentlichen gesamten Gebrauchsdauer des Lippendichtrings an der der Nut zugewandten Oberfläche der Dichtlippe anhaftet. Durch die erfindungsgemäße Ausgestaltung des Lippendichtrings ist von Vorteil, dass ein Teil des den Dichtspalt nur für die Druckprüfung verschließenden Mediums auf der der Nut zugewandten Oberfläche der Dichtlippe zurückbleibt und dadurch die Oberflächebeschichtung bildet, die nur einen sehr geringen Reibungskoeffizienten aufweist und temperaturbeständig ist. Unabhängig vom Material, aus dem die Dichtlippe besteht, wird dadurch die Bildung von Ölkohle nahezu ausgeschlossen, so dass der Lippendichtring gleichbleibend gute Gebrauchseigenschaften während einer sehr langen Gebrauchsdauer aufweist. Außerdem ist der erfindungsgemäße Lippendichtring einfach und kostengünstig herstellbar, da ein Teil des Mediums, das den Dichtspalt nur bei der Druckprüfung verschließt, gleichzeitig als Oberflächenbeschichtung zur Anwendung gelangt.

Zusätzlich zu der Oberflächenbeschichtung der Dichtlippe kann durch das Medium auch die Oberfläche des abzudichtenden Maschinenelements mit einer weiteren Oberflächenbeschichtung versehen werden, so dass insgesamt alle den Dichtspalt begrenzenden Wandungen mit einer hochtemperaturbeständigen, reibungsverringernden Oberflächenbeschichtung versehen sind.

Das Medium kann in der Viskositätsklasse ISO VG 68 bis 680, bevorzugt 460 bis 680 eingestuft sein. Speziell in der Viskositätsklasse ISO VG 460 bis 680 ist von Vorteil, dass das Medium bei der Druckprüfung fest in der Nut anhaftet und nicht durch den Prüfdruck herausgeblasen wird.

Beträgt die Viskositätsklasse ISO VG demgegenüber weniger als 68 ist von Nachteil, dass das Medium bei der Druckprüfung durch den Prüfdruck herausgeblasen wird.

Ist die Viskositätsklasse ISO VG demgegenüber größer als 680, ist von Nachteil, dass die Aufbringung erschwert ist.

Das Medium kann eine kinematische Viskosität bei 40°C aufweisen, die 61,2 bis 748, bevorzugt 291 bis 560 mm ²/s beträgt. Die kinematische Viskosität bei 100°C kann 8 bis 40, bevorzugt 22 bis 37 mm²/s betragen. Liegt die kinematische Viskosität unterhalb des bei den jeweiligen Temperaturen angegebenen unteren Grenzwerts, ist von Nachteil, dass das Medium bei der Druckprüfung durch den Prüfdruck herausgeblasen wird.

Liegt die kinematische Viskosität demgegenüber bei den jeweils angegebenen Temperaturen oberhalb des oberen Grenzwerts, ist von Nachteil, dass die Aufbringung erschwert ist.

Das Medium kann einen Flammpunkt nach DIN ISO 2592 aufweisen, der 150 bis 320°C, bevorzugt 250 bis 270°C beträgt. Für die meisten Anwendungsfälle ist ein derartiger Flammpunkt völlig ausreichend, da die üblichen Gebrauchstemperaturen von Lippendichtringen unterhalb der zuvor genannten Werte liegen. In jedem Fall ist es erforderlich, dass der Flammpunkt des Mediums unterhalb der maximalen Gebrauchstemperatur des Lippendichtrings liegt.

Das Medium kann einen Stockpunkt nach DIN ISO 3016 aufweisen, der - 15 bis - 30°C, bevorzugt - 24 bis - 25°C beträgt. Der Stockpunk gibt die Temperatur an, bei der das Medium gerade nicht mehr fließfähig ist.

Das Medium kann aus Öl oder einer Mischung von Ölen bestehen. Beispielsweise eignen sich hochtemperaturbeständige Sägekettenöle oder Mischungen solcher Öle.

Das Medium kann durch thixotrope Seifenfette oder thixotrope Gelfette gebildet sein, jeweils auf Basis zumindest eines Öls. Bei Verwendung von thixotropen Medien ist von Vorteil, dass die Umgebungstemperatur, mit der das Medium während einer Prüfung beaufschlagt ist, keinen Einfluss auf die Viskosität des Mediums hat und dass das Medium deshalb auch bei vergleichsweise hohen Temperaturen sicher innerhalb der Nut gehalten ist. Thixotrope Medien können auch dann für eine Druckprüfung zur Anwendung gelangen, wenn die Umgebungstemperatur während der Druckprüfung über der Schmelztemperatur beispielsweise von Wachsen liegt. Umgebungstemperaturen von bis zu 100°C sind unproblematisch.

Thixotrope Medien können einen Zusatz von Silicium-Verbindungen enthalten, wobei die Silicium-Verbindungen beispielsweise durch Kieselerde gebildet sind. Ein solches thixotropes Medium ist besonders umweltverträglich und muss daher im Anschluss an die Druckprüfung nicht separat entsorgt werden. Nach erfolgreich abgeschlossener Druckprüfung wird das abzudichtende Maschinenelement in seine bestimmungsgemäße Bewegung versetzt, wobei sich das Medium in Folge der Wellendrehung und/oder der entstehenden Vibrationen verflüssigt und durch die Förderwirkung der Nut in den abzudichtenden Raum gepumpt wird. Anschließend ist die Nut weitgehend frei und zur Rückförderung des abzudichtenden Mediums in Richtung des abzudichtenden Raums vollständig wirksam. Nur ein geringer Teil des Mediums verbleibt als Oberflächenbeschichtung auf der Oberfläche der Dichtlippe, die der Nut zugewandt ist. Die Dicke der Oberflächenbeschichtung beträgt bevorzugt zwischen 1 und 300 µm.

Wenn die Basis für das thixotrope Medium durch zumindest ein Öl gebildet ist, ist von Vorteil, dass das Medium mit den meisten abzudichtenden Medien sehr gut verträglich ist, so dass die Gebrauchseigenschaften des abzudichtenden Mediums nach dem Vermischen mit dem thixotropen Medium nicht nachteilig beeinflusst werden.

Das Medium kann eine von der Dichtlippe abweichende Farbe aufweisen. Hierbei ist von Vorteil, dass eine gegebenenfalls optische Kontrolle besonders einfach möglich ist. Es ist leicht zu erkennen, ob die Dichtlippe im Bereich der Drallstufe vollständig und/oder gleichmäßig mit dem Medium beschichtet ist. Vorzugsweise enthält das Medium einen Farbstoff mit UV-Indikator, der unter UV-Licht hell aufleuchtet.

Die Dichtlippe kann beispielsweise aus PTFE bestehen. Unter PTFE werden in diesem Zusammenhang auch PTFE-Compounds verstanden. Für viele Anwendungsfälle haben sich Dichtlippen aus PTFE als vorteilhaft bewährt, da ihre Oberflächen nach einem gewissen, minimalen Anfangsverschleiß glasieren und anschließend während einer sehr langen Gebrauchsdauer gleichbleibend gute Gebrauchseigenschaften aufweisen.

Obwohl aus PTFE bestehende Dichtlippen nur einen geringen Reibungskoeffizienten aufweisen, ist die Oberflächenbeschichtung mit dem Medium trotzdem sinnvoll, weil dadurch der Reibungskoeffizient noch weiter verringert wird.

Bevorzugt erfolgt das Einbringen des Mediums in die Nut durch Besprühen. Hierbei ist von Vorteil, dass die Beschichtung durch die Teilchen, die den Sprühnebel bilden, eine besonders gleichmäßige Dicke hat. Davon abweichend besteht auch die Möglichkeit, das Medium auf die dem Maschinenelement zugewandte Oberfläche der Dichtlippe und in die Nut zu streichen.

Im Anschluss an das Aufbringen des Mediums kann der Lippendichtring gelagert, transportiert und eingebaut werden, wobei die Umgebungstemperatur keinen nachteiligen Einfluss auf die Viskosität des Mediums hat.

Der Gegenstand der Erfindung wird nachfolgend durch die als Anlage beigefügten Zeichnungen weiter verdeutlicht.

Es zeigen:

### Kurzbeschreibung der Zeichnungen

- Fig. 1: einen Lippendichtring der erfindungsgemäßen Art in geschnittener Darstellung,

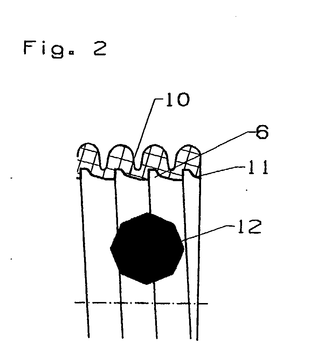

- Fig. 2: einen Ausschnitt aus der Dichtlippe des Lippendichtrings gemäß Fig. 1 auf der dem Maschinenelement zugewandten Seite in vergrößerter Darstellung.

### Ausführung der Erfindung

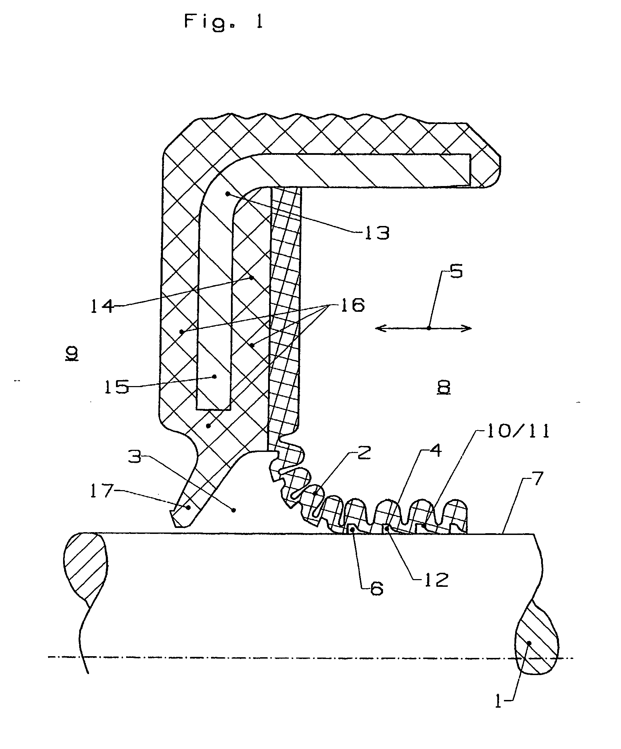

Der in Fig. 1 im Längsschnitt dargestellte Lippendichtring ist für ein relativ bewegbares Maschinenelement 1 bestimmt, beispielsweise für eine um eine Rotationsachse rotierende Welle. Der Lippendichtring umfasst eine flexible Dichtlippe 2, die in diesem Ausführungsbeispiel aus PTFE-Compound besteht. In dem hier gezeigten Ausführungsbeispiel ist die Dichtlippe 2 axial in Richtung des abzudichtenden Raums 8 nach Art des Schalltrichters einer Trompete vorgewölbt und umschließt die Oberfläche 7 des Maschinenelements 1 dichtend. Im Bereich des größten Durchmessers der Dichtlippe 2 ist diese an einem Stützring 13 mittelbar oder unmittelbar befestigt, beispielsweise mittels der Gummispur 14.

Der Stützring 13 ist im Bereich seines Radialvorsprungs 15 in eine Umhüllung 16 aus Gummi eingebettet, welche der Oberfläche 7 des Maschinenelements 1 auf der der Umgebung 9 zugewandten Seite mit einer umlaufenden Staublippe 17 zugeordnet ist. Die Dichtlippe 2 ist im Bereich des Dichtspalts 3 mit einer die Oberfläche 7 des Maschinenelements 1 vollständig umschließenden schraubengangförmigen Drallstufe 4 versehen, wobei die Drallstufe 4 durch die schraubengangförmige Nut 6 und die Oberfläche 7 des Maschinenelements 1 begrenzt ist. Die Drallstufe 4 ist derart ausgeführt, dass sich bei rotierendem Maschinenelement 1 im Bereich der Drallstufe 4 eine Förderwirkung des abzudichtenden Mediums in Richtung des abzudichtenden Raums 8 ergibt.

In diesem Ausführungsbeispiel ist die Dichtlippe 2 mit nur einer einzigen Drallstufe 4 versehen, die das abzudichtende Maschinenelement 1 nach Art einer Spirale auf seinem gesamten Außenumfang umschließt. Zur Verhinderung von Druckverlusten bei einer Druckprüfung durch die die Drallstufe 4 begrenzende Nut 6 ist es daher ausreichend, wenn die Drallstufe 4 an einer einzigen Umfangsstelle durch das Medium 12 verschlossen ist. Die Menge des Mediums 12 muss so bemessen sein, dass der Dichtspalt 3 durch das Medium 12 völlig verschlossen ist. Wird im Anschluss an die Montage des Lippendichtrings auf dem Maschinenelement 1 eine Druckprüfung vorgenommen, dann wird die Dichtlippe 2 durch den im abzudichtenden Raum 8 ansteigenden Druck an die Oberfläche 7 des Maschinenelements 1 verstärkt angepresst, was die Abdichtwirkung erhöht. Der Gasdruck bleibt bei unbeschädigtem und korrekt montiertem Lippendichtring während der Druckprüfung weitgehend konstant erhalten; im Bereich der Drallstufe 4 kann keinerlei Druckgas entweichen Demgegenüber käme es zu einem vergleichsweise raschen Druckverlust, wenn der Lippendichtring beschädigt und/oder fehlerhaft eingebaut wäre.

Während des an die Druckprüfung anschließenden Betriebs des Lippendichtrings findet eine Relativbewegung zwischen der Dichtlippe 2 und der Oberfläche 7 des relativ rotierenden Maschinenelements 1 statt, wobei durch die Relativbewegung des Maschinenelements 1 Wärme und Vibrationen entstehen. Das den Dichtspalt 3 verschließende Medium 12 wird dadurch in Richtung des abzudichtenden Raums 8 gefördert. Die Drallstufe 4 kann dadurch anschließend voll dem Zweck gerecht werden, für den sie vorgesehen ist, nämlich die Rückförderung von Leckflüssigkeit in den abzudichtenden Raum 8. Ein Teil des Mediums 12 bleibt jedoch als Oberflächenbeschichtung 11 auf der Oberfläche 10 der Dichtlippe 2 zurück, die der Nut 6 zugewandt ist.

## Patentansprüche

1. Dichtungsanordnung, umfassend einen Lippendichtring für ein relativ bewegbares Maschinenelement (1), mit einer flexiblen Dichtlippe (2) aus polymerem Werkstoff, die das Maschinenelement (1) im Bereich eines Dichtspalts (3) unter einer elastischen Vorspannung anliegend umschließt, wobei der Dichtspalt (3) an zumindest einer Umfangsstelle von einer Drallstufe (4) in Längsrichtung (5) durchdrungen ist, wobei die Drallstufe (4) durch eine schraubengangförmige Nut (6) in der Dichtlippe (2) und die der Nut (6) zugewandte abzudichtende Oberfläche (7) des Maschinenelements (1) begrenzt ist und wobei die Nut (6) den abzudichtenden Raum (8) mit der Umgebung (9) verbindet, **dadurch gekennzeichnet, dass** der Dichtspalt (3) im Bereich der die Drallstufe (4) begrenzenden Nut (6) durch ein Medium (12), nur zur Durchführung einer Druckprüfung, verschlossen ist, dass das Medium (12) eine Oberflächenbeschichtung (11) bildet, die während der im Wesentlichen gesamten Gebrauchsdauer des Lippendichtrings an der der Nut (6) zugewandten Oberfläche (10) der Dichtlippe (2) anhaftet, dass die Oberflächenbeschichtung (11) einen Reibungskoeffizient aufweist, der kleiner ist als der Reibungskoeffizient des polymeren Werkstoffs der Dichtlippe (2) und dass das Medium (12) gegen im Betrieb des Lippendichtrings auftretende Temperaturen beständig ist.

2. Dichtunasanordung nach Anspruch 1, **dadurch gekennzeichnet, dass** die Dicke der Oberflächenbeschichtung (11) 1 bis 300 µm beträgt.

3. Dichtungsanordnung nach einem der Ansprüche 1 oder 2, **dadurch gekennzeichnet, dass** das Medium (12) in der Viskositätsklasse ISO VG 68 bis 680 eingestuft ist.

4. Dichtungsanordnung nach einem der Ansprüche 1 bis 3, **dadurch gekennzeichnet, dass** das Medium (12) eine kinematische Viskosität bei 40 °C aufweist, die 61,2 bis 748 mm ²/s beträgt.

5. Dichtungsanordnung nach einem der Ansprüche 1 bis 4, **dadurch gekennzeichnet, dass** das Medium (12) eine kinematische Viskosität bei 100°C aufweist, die 8 bis 40 mm ²/s beträgt.

6. Dichtungsanordnung nach einem der Ansprüche 1 bis 5, **dadurch gekennzeichnet, dass** das Medium (12) einen Flammpunkt nach DIN ISO 2592 aufweist, der 150 bis 320°C beträgt.

7. Dichtungsanordnung nach einem der Ansprüche 1 bis 6, **dadurch gekennzeichnet, dass** das Medium (12) einen Stockpunkt nach DIN ISO 3016 aufweist, der - 15 bis - 30°C beträgt.

8. Dichtungsanordnung nach einem der Ansprüche 1 bis 7, **dadurch gekennzeichnet, dass** das Medium (12) aus Öl oder einer Mischung von Ölen besteht.

9. Dichtungsanordnung nach einem der Ansprüche 1 bis 8, **dadurch gekennzeichnet, dass** das Medium (12) durch thixotrope Seifenfette oder thixotrope Gelfette gebildet ist, jeweils auf Basis zumindest eines Öls.

10. Lippendichtring einer Dichtungsanordnung gemäß einem der Ansprüche 1 bis 9, **dadurch gekennzeichnet, dass** dessen Nut (6) eine Oberflächenbeschichtung (11) aufweist, mit einem Reibungskoeffizient, der kleiner ist als der Reibungskoeffizient des polymeren Werkstoffes der Dichtlippe (2) und dass die Oberflächenbeschichtung (11) gegen im Betrieb des Lippendichtrings auftretende Temperaturen beständig ist.

## Claims

1. Sealing arrangement, comprising a lip sealing ring for a relatively movable machine element (1), with a flexible sealing lip (2) made of polymeric material, which adjacently encloses the machine element (1) in the region of a sealing gap (3) under elastic prestressing, the sealing gap (3) being penetrated in the longitudinal direction (5) in at least one circumferential location by a spiral stage (4), the spiral stage (4) being bounded by a helical groove (6) in the sealing lip (2) and by the surface (7) of the machine element (2) that is to be sealed, facing the groove (6), and the groove (6) connecting the space (8) that is to be sealed to the surroundings (9), **characterized in that** the sealing gap (3) is sealed, just for carrying out a pressure test, in the region of the groove (6) bounding the spiral stage (4) by a medium (12), **in that** the medium (12) forms a surface coating (11), which adheres to the surface (10) of the sealing lip (2) facing the groove (6) during substantially the entire service life of the lip sealing ring, **in that** the surface coating (11) has a friction coefficient which is less than the friction coefficient of the polymeric material of the sealing lip (2) and **in that** the medium (12) is resistant to temperatures occurring during the operation of the lip sealing ring.

2. Sealing arrangement according to Claim 1, **characterized in that** the thickness of the surface coating (11) is 1 to 300 µm.

3. Sealing arrangement according to either of Claims 1 and 2, **characterized in that** the medium (12) is classified in viscosity class ISO VG 68 to 680.

4. Sealing arrangement according to one of Claims 1 to 3, **characterized in that** the medium (12) has a kinematic viscosity at 40°C of 61.2 to 748 mm²/s.

5. Sealing arrangement according to one of Claims 1 to 4, **characterized in that** the medium (12) has a kinematic viscosity at 100°C of 8 to 40 mm²/s.

6. Sealing arrangement according to one of Claims 1 to 5, **characterized in that** the medium (12) has a flash point to DIN ISO 2592 of 150 to 320°C.

7. Sealing arrangement according to one of Claims 1 to 6, **characterized in that** the medium (12) has a pour point to DIN ISO 3016 of -15 to -30°C.

8. Sealing arrangement according to one of Claims 1 to 7, **characterized in that** the medium (12) comprises oil or a mixture of oils.

9. Sealing arrangement according to one of Claims 1 to 8, **characterized in that** the medium (12) is formed by thixotropic soap greases or thixotropic gel greases, respectively based on at least one oil.

10. Lip sealing ring of a sealing arrangement according to one of Claims 1 to 9, **characterized in that** its groove (6) has a surface coating (11), with a friction coefficient which is less than the friction coefficient of the polymeric material of the sealing lip (2) and **in that** the surface coating (11) is resistant to temperatures occurring during the operation of the lip sealing ring.

## Revendications

1. Dispositif d'étanchéité, comprenant un joint à lèvre pour un élément de machine (1) en mouvement relatif, avec une lèvre d'étanchéité flexible (2) en un matériau polymère, qui entoure l'élément de machine (1) dans la région d'une fente d'étanchéité (3) en s'y appliquant avec une précontrainte élastique, dans lequel la fente d'étanchéité (3) est traversée en direction longitudinale (5) en au moins un point de la périphérie par un étage de turbulence (4), dans lequel l'étage de turbulence (4) est limité par une rainure (6) en forme de pas de vis dans la lèvre d'étanchéité (2) et la surface (7) de l'élément de machine à rendre étanche (1) tournée vers la rainure (6), et dans lequel la rainure (6) relie l'espace à rendre étanche (8) avec l'ambiance (9), **caractérisé en ce que** la fente d'étanchéité (3) est fermée dans la région de la rainure (6) limitant l'étage de turbulence (4) par un fluide (12), uniquement pour l'exécution d'un essai de pression, **en ce que** le fluide (12) forme un revêtement de surface (11), qui adhère à la surface (10) de la lèvre d'étanchéité (2) tournée vers la rainure (6) pendant sensiblement toute la durée d'utilisation du joint à lèvre, **en ce que** le revêtement de surface (11) présente un coefficient de frottement qui est inférieur au coefficient de frottement du matériau polymère de la lèvre d'étanchéité (2), et **en ce que** le fluide (12) résiste aux températures se produisant pendant le fonctionnement du joint à lèvre.

2. Dispositif d'étanchéité selon la revendication 1, **caractérisé en ce que** l'épaisseur du revêtement de surface (11) vaut de 1 à 300 µm.

3. Dispositif d'étanchéité selon l'une des revendications 1 ou 2, **caractérisé en que** le fluide (12) est rangé dans la classe de viscosité ISO VG 68 à 680.

4. Dispositif d'étanchéité selon l'une quelconque des revendications 1 à 3, **caractérisé en ce que** le fluide (12) présente une viscosité cinématique à 40°C, qui vaut de 61,2 à 748 mm²/s.

5. Dispositif d'étanchéité selon l'une quelconque des revendications 1 à 4, **caractérisé en ce que** le fluide (12) présente une viscosité cinématique à 100°C, qui vaut de 8 à 40 mm²/s.

6. Dispositif d'étanchéité selon l'une quelconque des revendications 1 à 5, **caractérisé en ce que** le fluide (12) présente un point éclair selon DIN ISO 2592, qui vaut de 150 à 320°C.

7. Dispositif d'étanchéité selon l'une quelconque des revendications 1 à 6, **caractérisé en ce que** le fluide (12) présente un point de solidification selon DIN ISO 3016, qui vaut de -15 à -30°C.

8. Dispositif d'étanchéité selon l'une quelconque des revendications 1 à 7, **caractérisé en ce que** le fluide (12) se compose d'huile ou d'un mélange d'huiles.

9. Dispositif d'étanchéité selon l'une quelconque des revendications 1 à 8, **caractérisé en ce que** le fluide (12) est formé par des graisses de savons thixotropes ou des graisses de gels thixotropes, chaque fois à base d'au moins une huile.

10. Joint à lèvre d'un dispositif d'étanchéité selon l'une quelconque des revendications 1 à 9, **caractérisé en ce que** sa rainure (6) présente un revêtement de surface (11), avec un coefficient de frottement qui est inférieur au coefficient de frottement du matériau polymère de la lèvre d'étanchéité (2) et **en ce que** le revêtement de surface (11) résiste aux températures se produisant pendant le fonctionnement du joint à lèvre.
